# EUROPEAN PATENT APPLICATION

(11) **EP 2 749 846 A1**
(43) Date of publication of application: **02.07.2014**
(21) Application number: 13199356.0
(22) Date of filing: 23.12.2013
(51) Int. Cl.: G01C 21/32, G01C 21/36, G06Q 30/00

(54) **Map management apparatus and map management method**

(30) Priority: 26.12.2012 JP 2012283259
(71) Applicant: Hitachi Ltd., Tokyo (JP)
(72) Inventor: Ishii, Takaaki, Tokyo, 100-8280 (JP); Miyamoto, Yoh, Tokyo, 100-8280 (JP)
(74) Representative: Beetz & Partner

(57) **Abstract**

A map management apparatus (2) includes: a storage unit that stores therein update history information (32) which stores therein a user of a terminal unit to which a version of an area of a map is available, the user being associated with the version of the area of the map, and at least one area constituting the map; and a control unit that creates, based on the update history information (32), information for encouraging the user to update the version, by comparing a first route which is searched using a currently-available version to a second route which is searched using a version updated from the currently-available version, transmits the created information to the terminal unit (3,4), and makes the transmitted information display in the terminal unit.

## Description

### BACKGROUND OF THE INVENTION

### 1. Field of the Invention

The present invention relates to a map management apparatus and a map management method.

### 2. Description of the Related Art

A technique of displaying a map and a navigation route on the map in a vehicle terminal and a mobile terminal of a user until the user reaches a destination has been widely used in recent years. For example, when a road is newly opened and a corresponding map is updated, the user of the terminal typically purchases only an updated area of the map.

Japanese Laid-Open Patent Application, Publication No. 2004-085245 (to be referred to as Patent Document 1 hereinafter), paragraphs 0014 to 0017 discloses a map information distribution system capable of saving a communication time and a communication cost spent for updation by distributing minimum updated map information along a guide route of the moving body.

### SUMMARY OF THE INVENTION

When a user wants to see an updated map, the user has to pay for it and has good reason to make a careful decision on whether or not the map should be updated. The system of Patent Document 1, however, fails to provide information for making such a decision. Without appropriate information, the user tends to refrain from partially updating the map.

The present invention has been made in an attempt to encourage a partial update of a map.

A map management apparatus of the present invention includes: a storage unit that stores therein update history information which stores therein a user of a terminal unit to which a version of an area of a map is available, the user being associated with the version of the area of the map, and at least one area constituting the map; and a control unit that creates, based on the update history information, information for encouraging the user to update the version, by comparing a first route which is searched using a currently-available version to a second route which is searched using a version updated from the currently-available version, transmits the created information to the terminal unit, and makes the transmitted information display in the terminal unit.

Other means will be described later in an embodiment for carrying out the present invention.

According to the present invention, a partial update of a map can be encouraged.

### BRIEF DESCRIPTION OF THE DRAWINGS

FIG. 1 is a diagram for explaining a configuration of a map management system according to an embodiment of the present invention.
FIG. 2A and FIG. 2B are diagrams for explaining a flow of financial resources and a large/small relation of amounts of money, respectively, according to the embodiment.
FIG. 3A and FIG. 3B are diagrams each illustrating an example of a screen displayed in a vehicle terminal or a mobile terminal according to the embodiment.
FIG. 4A and FIG. 4B are diagrams each illustrating an example of a screen displayed in a vehicle terminal or a mobile terminal according to the embodiment.
FIG. 5A and FIG. 5B are diagrams illustrating an example of a structure of a map and an example of a useful tip screen, respectively, according to the embodiment.
FIG. 6A to FIG. 6G are diagrams each illustrating an example of a screen displaying an advertisement according to the embodiment.
FIG. 7A to FIG. 7C are diagrams each illustrating an example of a screen displaying a newly-opened road according to the embodiment.
FIG. 8 is a diagram illustrating an example of point-of-interest information according to the embodiment.
FIG. 9 is a diagram illustrating an example of update history information according to the embodiment.
FIG. 10 is a diagram illustrating an example of toll road information according to the embodiment.
FIG. 11A and FIG. 11B are diagrams each illustrating an example of display history information according to the embodiment.
FIG. 12 is a diagram illustrating an example of advertisement information according to the embodiment.
FIG. 13 is a diagram illustrating an example of charging information according to the embodiment.
FIG. 14A and FIG. 14B are flowcharts illustrating a general processing procedure and an advertisement setting processing procedure, respectively, according to the embodiment.
FIG. 15 is a flowchart illustrating a navigation processing procedure according to the embodiment.
FIG. 16A and FIG. 16B are flowcharts illustrating a useful tip display processing procedure and a charging processing procedure, respectively, according to the embodiment.

### DETAILED DESCRIPTION OF THE EXEMPLARY EMBODIMENT

An embodiment for carrying out the present invention (which may also be referred to as this embodiment hereinafter) is described below with reference to related drawings.

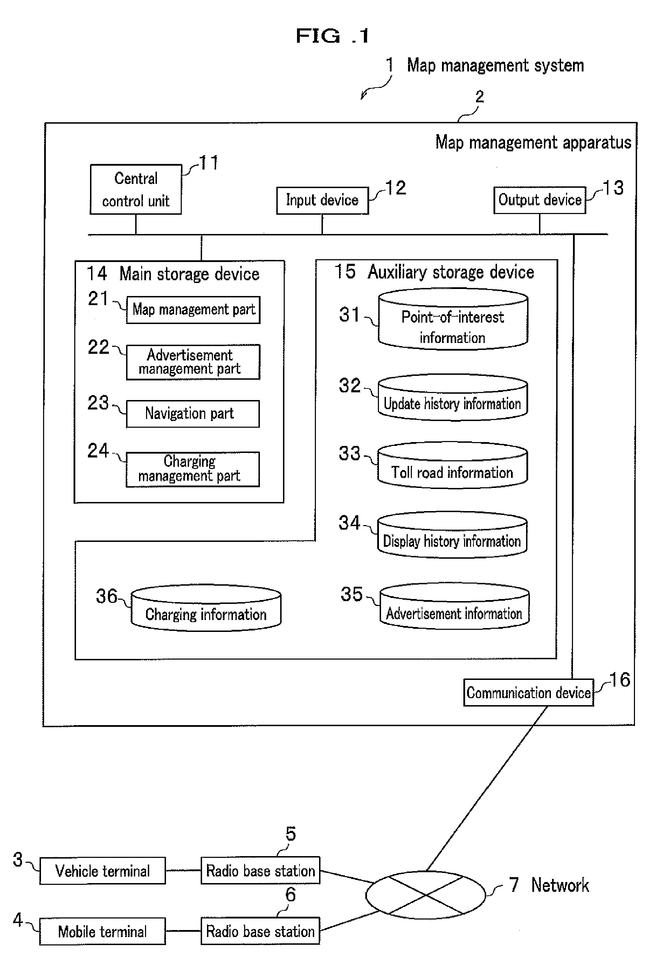

FIG. 1 is a diagram illustrating a map management system according to an embodiment of the present invention. The map management system 1 includes a map management apparatus 2, a vehicle terminal 3, and a mobile terminal 4, which are connected to each other via a network 7 and radio base stations 5, 6. The map management apparatus 2 is embodied by a generally-available computer. The map management apparatus 2 includes a central control unit (which may also be referred to as a control unit) 11, an input device 12 such as a keyboard and a mouse, an output device 13 such as a display screen and a speaker, a main storage device 14, an auxiliary storage device 15, and a communication device 16, which are connected to each other via a system bus.

The main storage device 14 includes a map management part 21, an advertisement management part 22, a navigation part 23, and a charging management part 24, each of which is a program. To simplify explanation, the components 21 to 24 are herein assumed to directly perform their respective functions. It is, however, the central control unit 11 that actually reads and loads each of the programs from the auxiliary storage device 15 into the main storage device 14 and performs the functions of the programs (to be described in detail hereinafter). The auxiliary storage device 15 stores therein point-of-interest information 31, update history information 32, toll road information 33, display history information 34, advertisement information 35, and charging information 36.

The vehicle terminal 3 is a generally-available car-mounted computer. The mobile terminal 4 is a generally-available portable computer. The vehicle terminal 3 and the mobile terminal 4 each include a central control unit, an input device such as a keyboard and a touch screen, an output device such as a display screen and a speaker, a main storage device, an auxiliary storage device, and a communication device (all not shown), which are connected to each other via a system bus. The input device may be integrated with the output device. The auxiliary storage device stores therein a GPS (Global Positioning System) processing part (not shown) as a program. The GPS processing part loaded into the main storage device receives radio waves from a plurality of GPS satellites and thereby calculates a current position (a latitude, a longitude, and a height) of the vehicle terminal 3 or the mobile terminal 4. That is, while communication between the vehicle terminal 3 (or the mobile terminal 4) and the map management apparatus 2 is established, the map management apparatus 2 can recognize a location of the vehicle terminal 3 (or the mobile terminal 4) in real time.

Note that, in downloading a map by the vehicle terminal 3 (or the mobile terminal 4), the vehicle terminal 3 (or the mobile terminal 4) may download (purchase) the map as a whole from the map management apparatus 2 or may have a tentative access to the map stored in the map management apparatus 2 not by downloading but by using a browser. In this embodiment, the term "update" means that the map is updated in the both cases. In other words, the "update" includes a substitution of a previously-stored map with a new map as well as a temporary view of the new map.

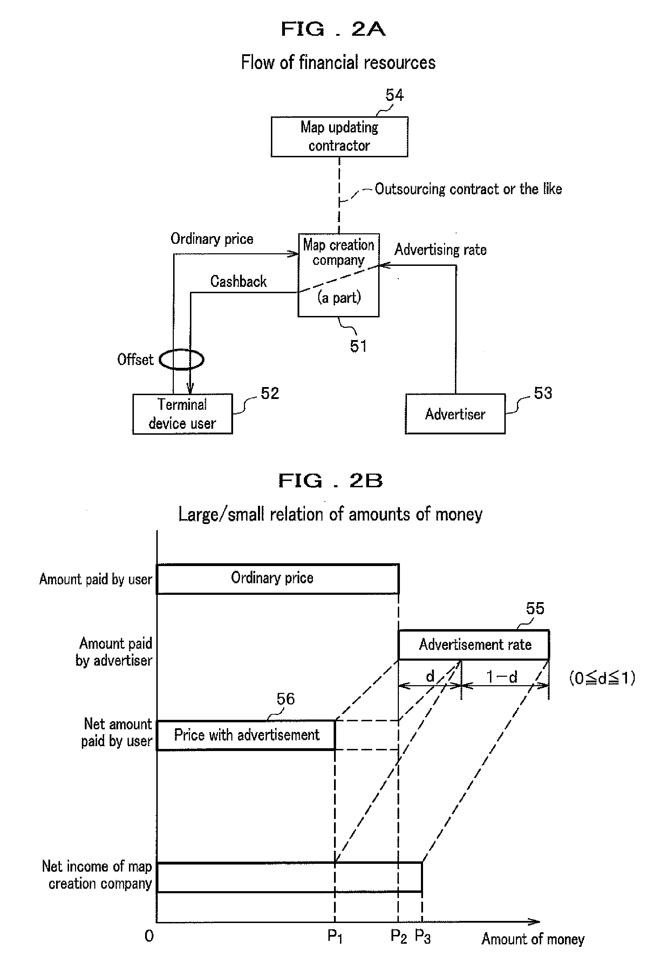

Referring to FIG. 2A, a flow of financial resources such as an advertising rate or the like is described. A map creation company 51 creates and updates a map and delivers the map to a terminal device user 52 (a user of the vehicle terminal 3 or the mobile terminal 4, which may be simply referred to as a "user" hereinafter). A price of the map, referred to as an "ordinary price" is paid from the user 52 to the map creation company 51. An advertiser 53 who owns a shop or the like in an area on the map provides an advertisement to the map which is created and updated by the map creation company 51. A price of the advertisement referred to as an "advertising rate" is paid from the advertiser 53 to the map creation company 51. The map creation company 51 pays at least a part of the received advertising rate (cashback). The ordinary price and the cashback are thus offset. That is, the advertiser 53 expects that the user 52 sees the advertisement, comes to a shop or the like of the advertiser 53, and purchases goods or services there. The map creation company 51 itself may perform a set of the above-described operations. In many cases, however, the map creation company 51 outsources the operations such as map updating and calculation of an amount of the ordinary price, the advertising rate, and the cashback to outside contractors (map updating contractors 54).

Referring to FIG. 2B, a large/small relation of amounts of money such as the ordinary price is described. A ratio of amounts of the advertising rate 55 distributed between the user 52 and the map creation company 51 is referred to as a distribution coefficient "d" (0≤d≤1). "Ordinary price - Advertising rate × d" is a price with advertisement 56, which corresponds to a net amount paid by the user 52. "Ordinary price - Advertising rate × d + Advertising rate × (1-d)" is an amount of a net income of the map creation company 51. Let the price with advertisement be P1; the ordinary price, P2; and the net income of the map creation company, P3. The map creation company 51, the user 52, and the advertiser 53 all become content if a large/small relation of 0≤P1≤P2≤P3 holds.

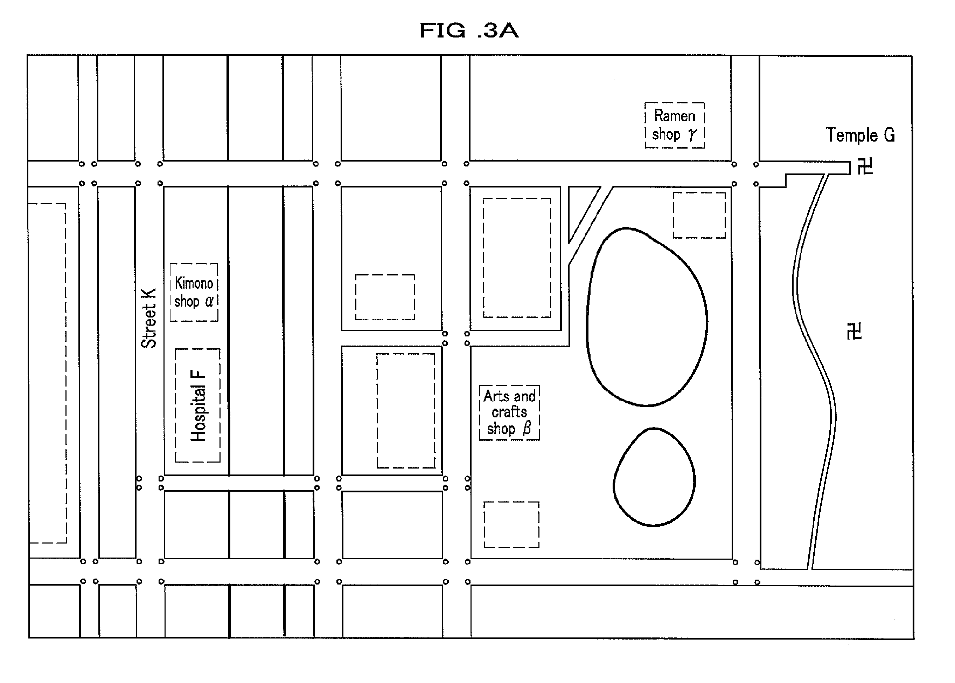

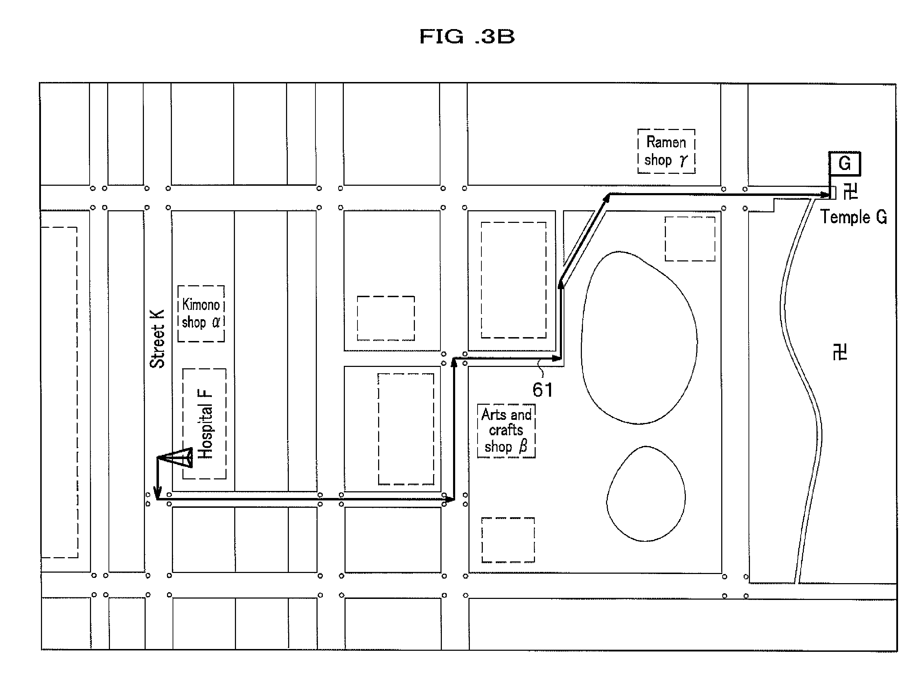

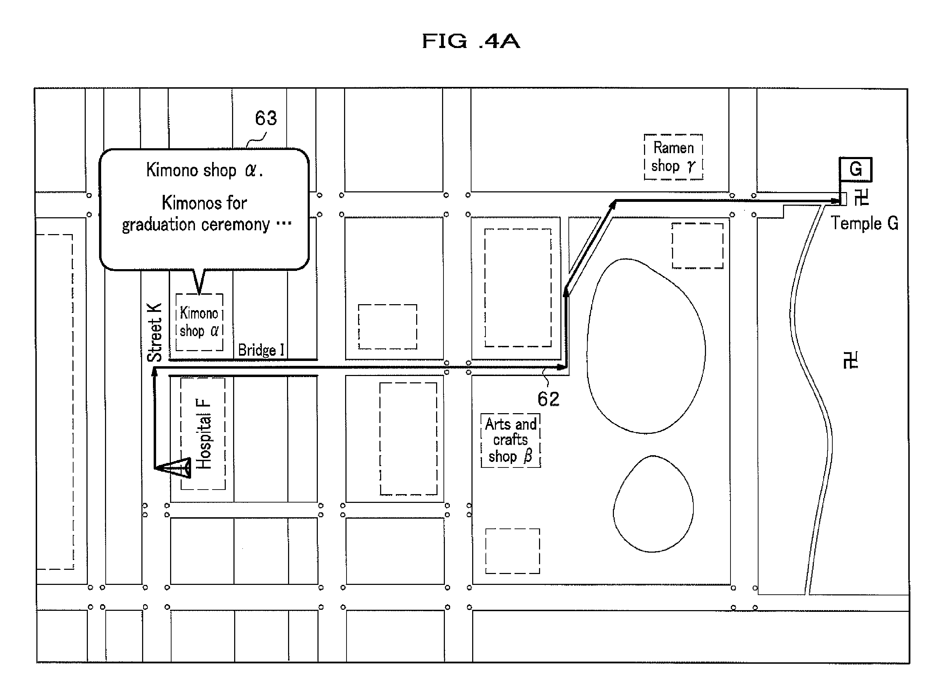

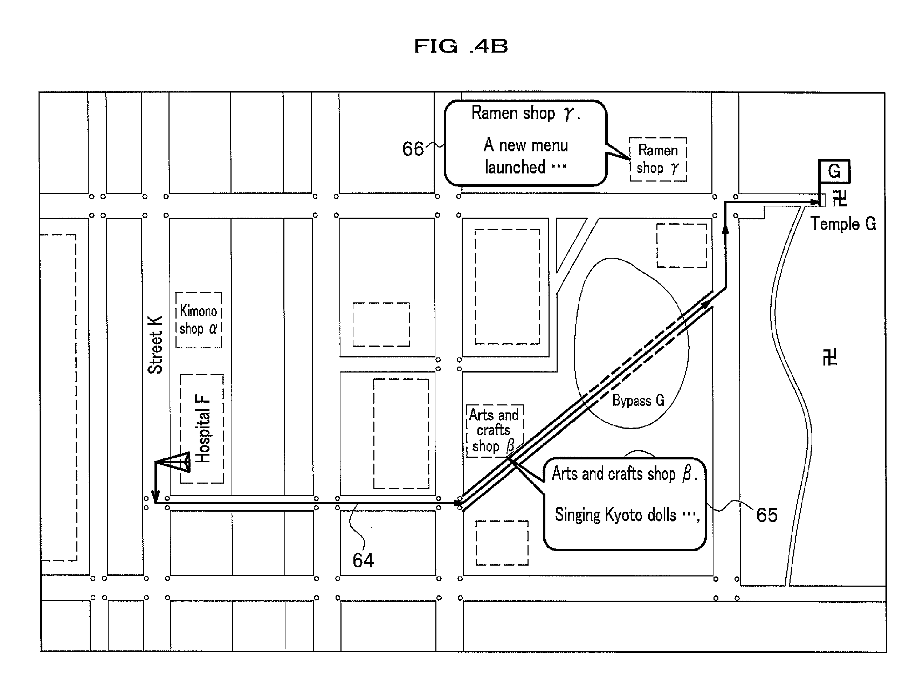

FIGS. 3A, 3B, 4A, and 4B are diagrams each illustrating an example of a map displayed on the output device of the vehicle terminal 3 or the mobile terminal 4 (to be collectively referred to as the vehicle terminal 3 hereinafter). Let a user of the vehicle terminal 3 depart from "Hospital F" to come to "Street K"(FIG. 3A). The user then touches his/her destination of "Temple G" on the map with the finger, searches for the shortest route from the departure point to the destination to find a route 61 displayed as the searched result (FIG. 3B).

Let us assume herein that "Bridge I" is newly opened and an updated map with "Bridge I" becomes available to the vehicle terminal 3. In this case, if the user searches for the route as described above, this time a route 62 via Bridge I of FIG. 4A is displayed as the searched result. The user then sees an advertiser 63 of a "kimono shop" situated along the route 62. Another example is that "Bypass Y" is newly opened and an updated map with "Bypass Y" becomes available to the vehicle terminal 3. In this case, if the user searches for the route as described above, this time a route 64 via Bypass Y of FIG. 4B is displayed as the searched result. The user then sees an advertiser 65 of an "arts and crafts shop" situated along the route 64. The user also sees an advertisement 66 of a "ramen shop" which possibly increases its sales by the newly-opened Bypass Y. Though details will be described later, a map creation company can obtain an advertising rate from a user's view of an advertisement.

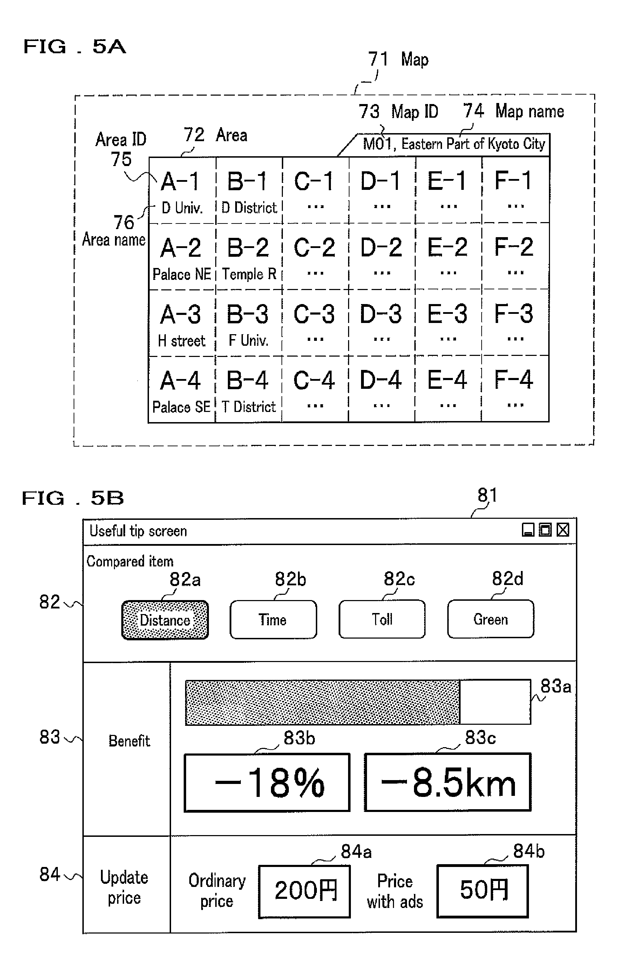

Referring to FIG. 5A, a structure of the map is described. A map 71 includes a plurality of areas 72 which are not overlapped each other. A shape of the area 72 is arbitrary without limitation, but it is typically rectangular. The map 71 has a map ID 73 which is an identifier for uniquely identifying itself and a map name 74 which is a name of its own. Each of the areas 72 has an area ID 75 which is an identifier for uniquely identifying a location of its own with respect to the map 71, and an area name 76 which is a name of its own.

Referring to FIG. 5B, a useful tip screen 81 is described. The useful tip screen 81 visually shows possible benefits obtained if the user updates the map (information which motivates the user to update the map). The useful tip screen 81 includes a compared item field 82, a benefit field 83, and an update price field 84. The compared item field 82 includes a distance button 82a, a time button 82b, a toll button 82c, and a green button 82d. Assume a case where, for example, the route 61 of FIG. 3B is compared to the route 62 of FIG. 4A. It is readily understood that a distance (a driving distance) of the route 61 can be compared to that of the route 62. Time required for driving the two routes can be compared based on an average speed of a vehicle. Tolls for driving the two routes can be compared. Also, amounts of emissions of carbon dioxide or the like derived from the drives on the two routes can be compared based on an average fuel consumption per unit distance of the vehicle. Such information is provided for encouraging the user to update a corresponding map by making the user known that, if a map is updated, the user can find a shorter or lower-cost route.

When the user presses down the distance button 82a, the map management apparatus 2 displays a result obtained by comparing the distance of the route 61 to that of the route 62 in the benefit field 83. The result indicates that the route 62 is shorter than the route 61 by "8.5 km" (a field 83c), which corresponds to a distance 18% shorter with respect to the route 61 (100%) (a field 83b). Note that values shown in the fields 83b, 83c are given for illustrative purposes and are not related to actual values for Kyoto city. In a bar chart 83a, a portion corresponding to 82% (=100-18) of 100% of the whole bar chart 83a is hatched from the extreme left, which represents the 18% shorter route 62. The map management apparatus 2 displays an ordinary price in a field 84a and a price with advertisement in a field 84b of the update price field 84 for inviting the user to update the map.

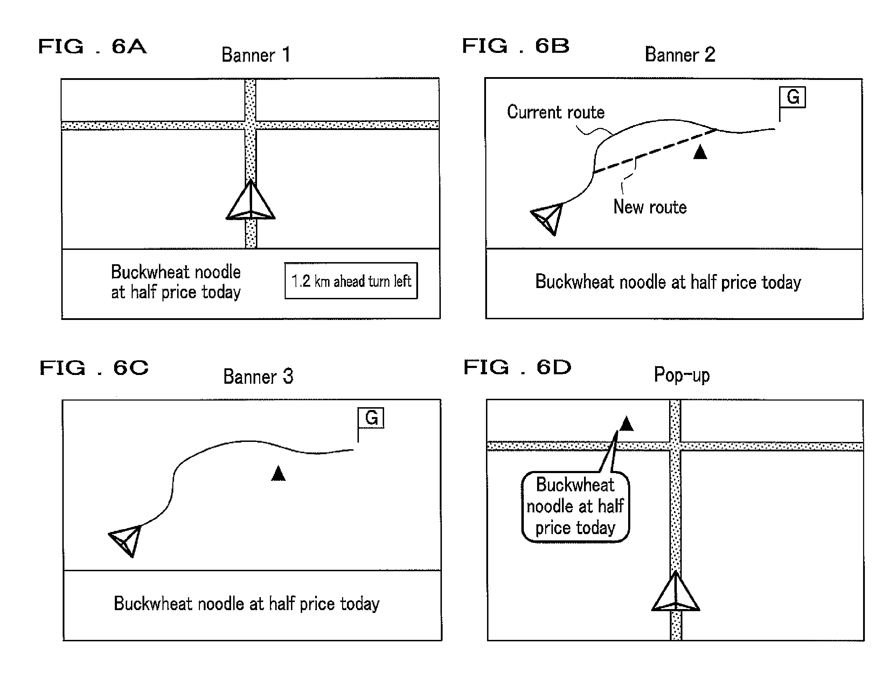

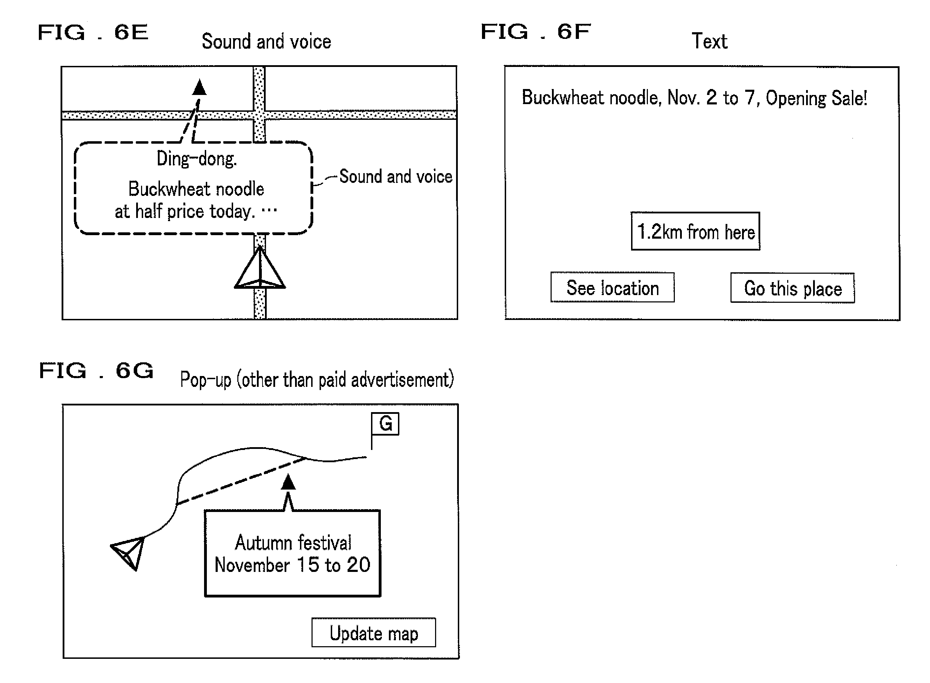

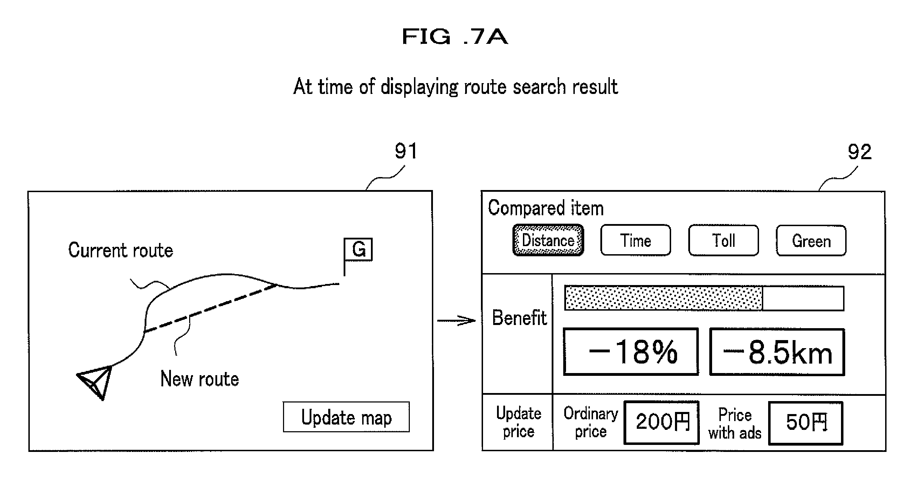

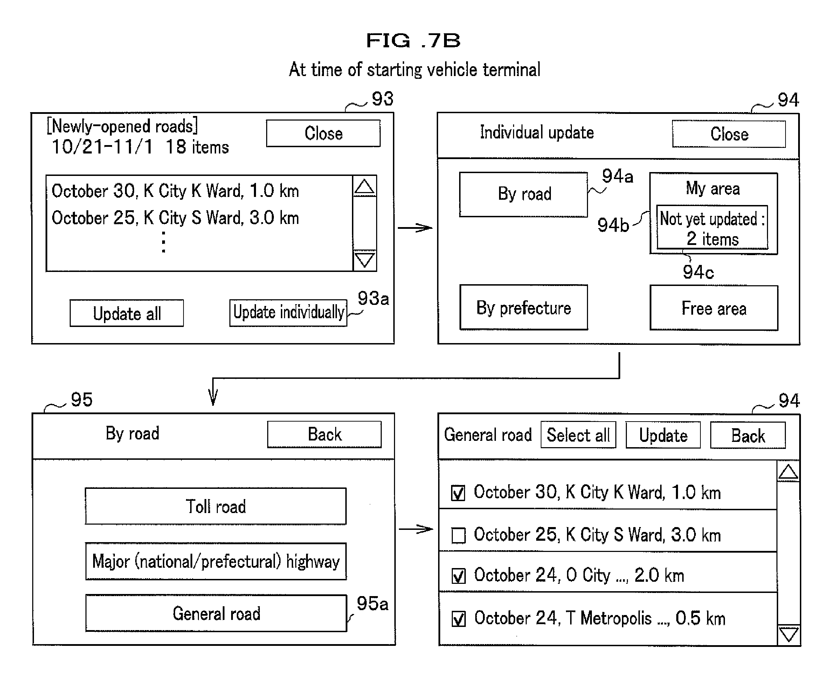

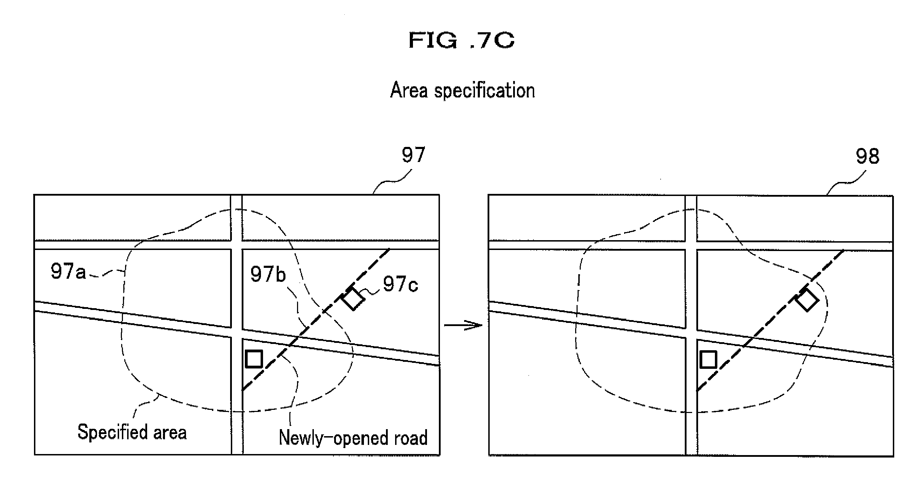

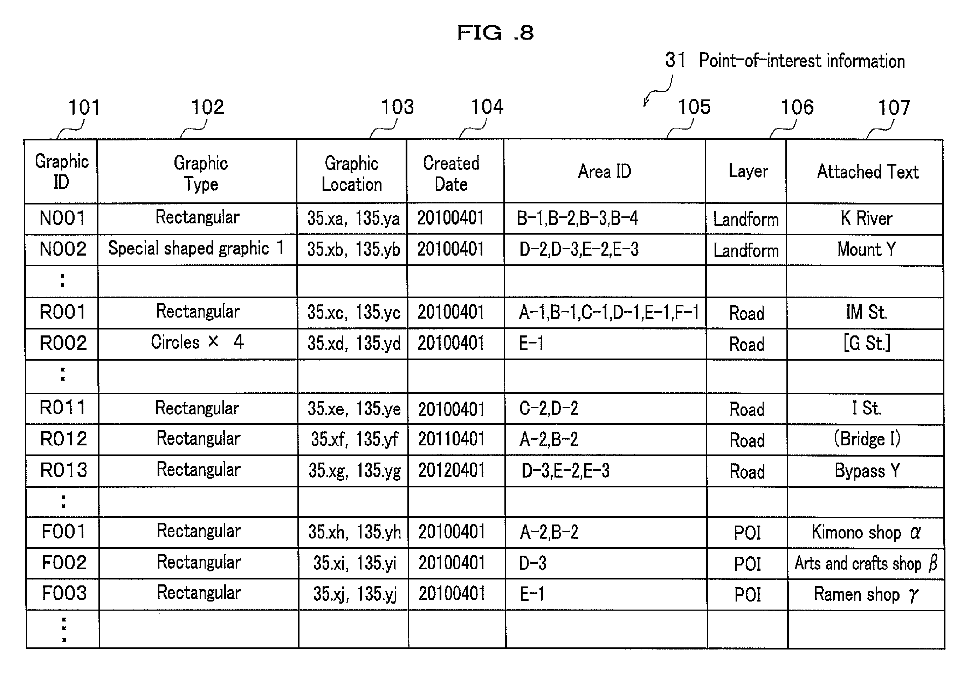

Prior to explanation with reference to FIG. 6 and FIG. 7, the point-of-interest information 31 is described referring to FIG. 8. A graphic ID (a field 101) is an identifier which uniquely identifies a graphic (a feature) on a map. A graphic type (a field 102) is a shape of the graphic. A graphic of a road is typically "rectangular". Though not shown, the graphic type actually contains information on a size or the like of the graphic, which is necessary for the map management apparatus 2 to appropriately display the graphic, such as, for example, "Rectangle: X by Y meters and Z degrees to horizontal line". A graphic location (a field 103) is a location (a latitude and a longitude) of a centroid of the graphic. A created date (a field 104) is a date when the graphic is created. An area ID (a field 105) is an ID of one or more areas to which the graphic belongs. A layer (a field 106) is a name of a layer which constitutes the map. The layer herein is any one of: "Landform" representing a natural landform; "Road" representing a road; and "POI (point of interest)" representing a structure or the like on the ground. An attached text (a field 107) is a text displayed with the graphic.

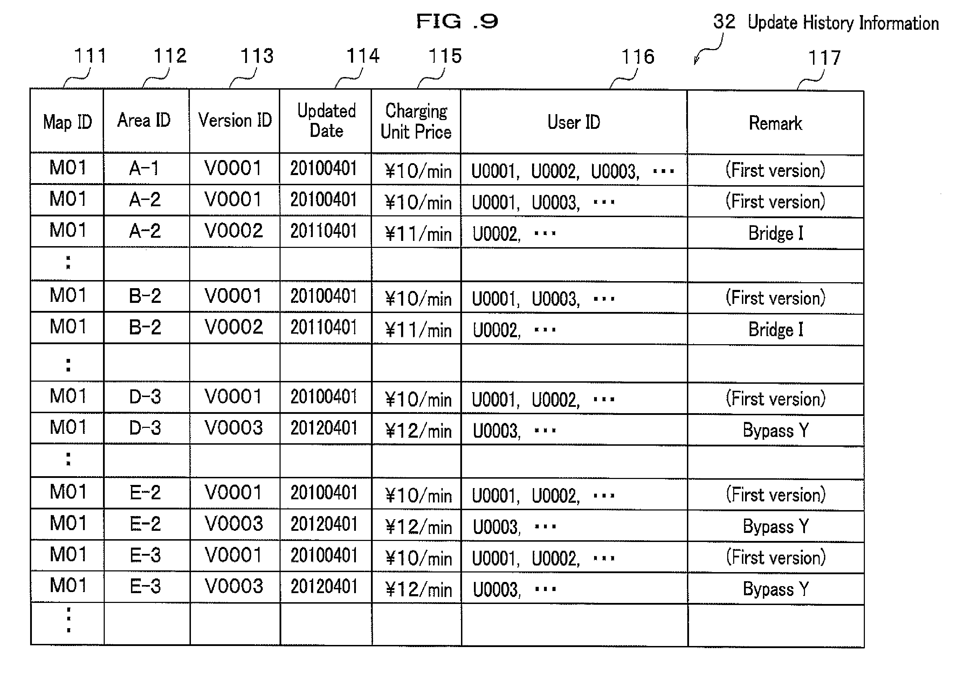

Referring to FIG. 9, the update history information 32 is described. A map ID (a field 111) and an area ID (a field 112) are as explained above. A version ID (a field 113) is an identifier which uniquely identifies a version of an area of a map and indicates how new is the version of the area. The larger the number, the newer the version. Usually, when a new road is opened, a new version is created. An updated date (a field 114) is a date when a version is updated. A charging unit price (a field 115) is an amount paid by a user who sees an area of a map. The user is herein assumed to see a map in the map management apparatus 2 via the vehicle terminal 3 using a browser. The charging unit price is thus a charge per unit time. If an area of the map is purchased (downloaded into the vehicle terminal 3), not the unit price but a selling price may be stored therein. A user ID (a field 116) is an identifier which uniquely identifies one or more users who use the vehicle terminal 3. The user ID used herein is assumed to be also an identifier which uniquely identifies the vehicle terminal 3. A remark (a field 117) shows "<First version>" indicating that an area of the map is as it was originally created, or a name of a newly-opened road based on which the area of the map is updated.

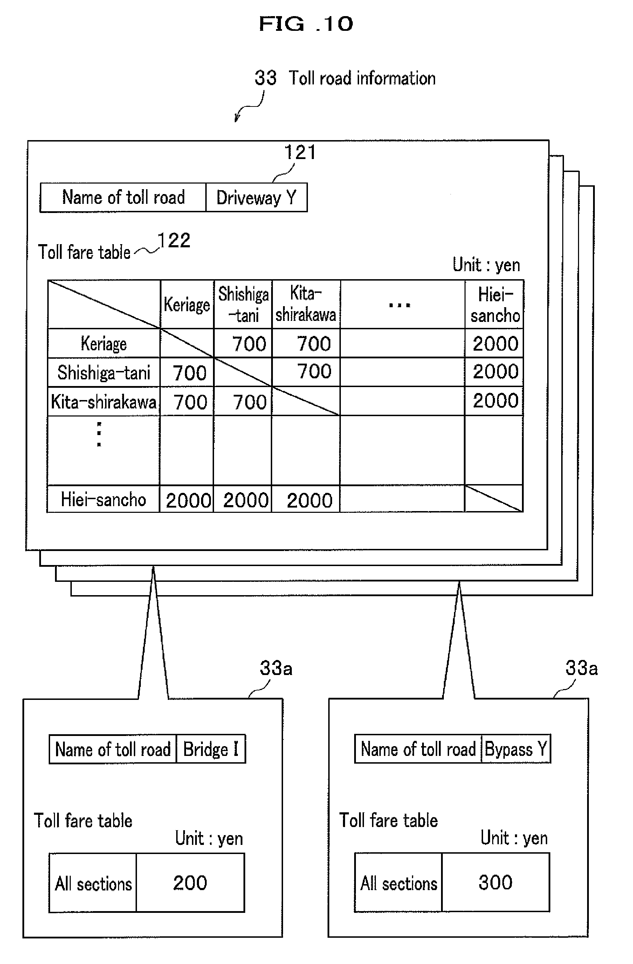

Referring to FIG. 10, the toll road information 33 is described. The toll road information 33 is present as many pieces as the number of toll roads. Each piece of the toll road information 33 stores therein a name of a toll road (a field 121) and a toll fare table 122 of the toll road. A title column of the toll fare table 122 shows a start point of the toll road, and, a title row thereof, an end point. A cell at an intersection of the title column and the title row stores therein a toll fare of a vehicle for driving each section between the start point and the end point. Note that regarding the toll road information 33, there are some examples such as 33a and 33b in which toll road fairs for all sections are single priced.

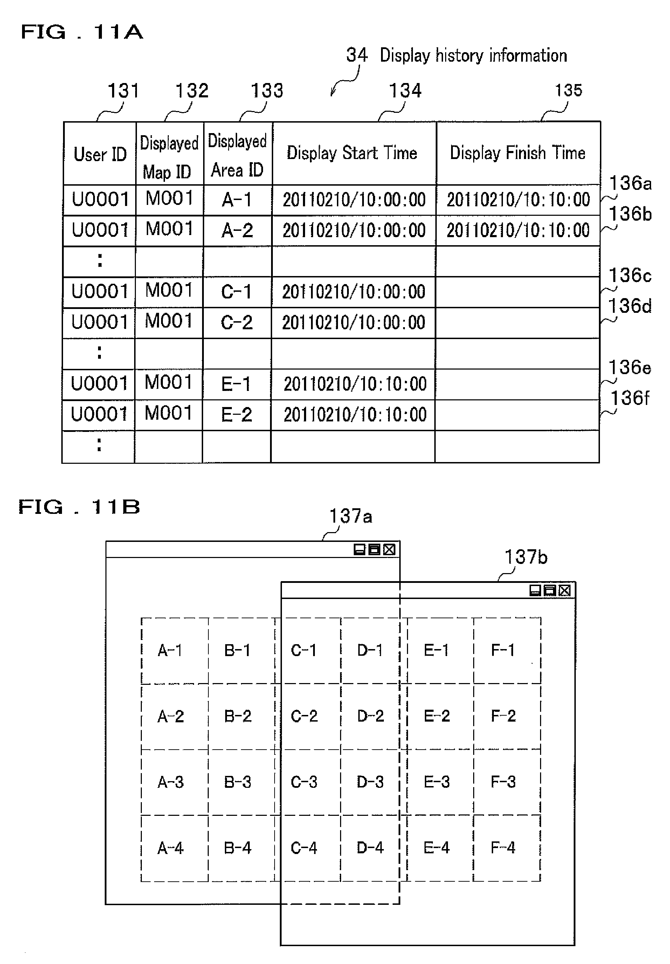

Referring to FIG. 11A and FIG. 11B, the display history information 34 is described. A user ID (a field 131) is as explained above. A displayed map ID (a field 132) is an ID of a map having been displayed in the output device of the vehicle terminal 3. A displayed area ID (a field 133) is an ID of an area on the map having been displayed. A display start time is a date and time when the display of the area was started. A display finish time is a date and time when the display of the area was finished. Assume a case where the vehicle terminal 3 is started at 10:00:00 on 20110210 (February 10, 2011), and a map is then displayed on a screen 137a of FIG. 11B. The screen 137a displays areas A-1, A-2, ..., and D-4. At this time, records 136a to 136d or the like of FIG. 11A are created and "20110210/10:00:00" is stored in a display start time field 134 for each of the records. It is assumed herein that, along with a drive of a vehicle by the user or an operation by the user, a screen 137a is switched to a screen 137b at 10:10:00 on February 10, 2011. The screen 137b displays areas C-1, C-2, ..., and F-4. At this time, records 136a, 136b, or the like of FIG. 11A are created and "20110210/10:10:00" is stored in a display finish time field 135 for each of the records. Records 136e, 136f, or the like corresponding to newly-displayed areas are then created, and "20110210/10:10:00" is stored in the display start time field 134 for each of the records.

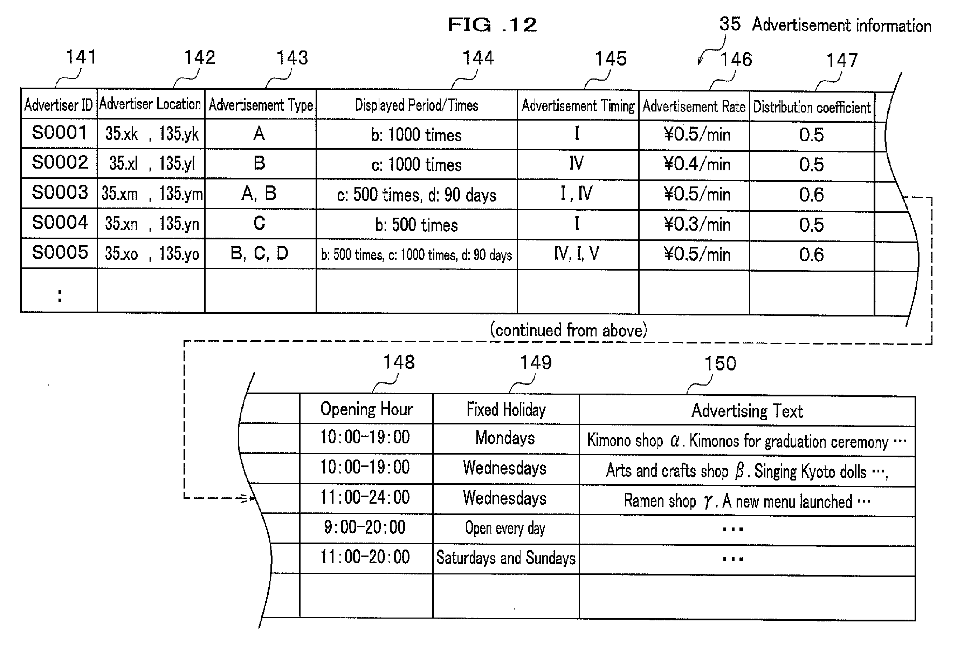

Referring to FIG. 12, the advertisement information 35 is described. An advertiser ID (a field 141) is an identifier which uniquely identifies an advertiser. An advertiser location (a field 142) is a latitude and a longitude of a location at which a shop or the like of the advertiser is present.

An advertisement type (a field 143) is a type of how to display an advertisement. The advertiser specifies one or more advertisement types. Four advertisement types are exemplified as follows.

A: "Banner". Characters or the like are displayed in a prescribed portion of a screen. For example, in FIG. 6A to FIG. 6C, characters meaning "Buckwheat noodle at half price today" are displayed in a lower portion of the screen.

B: "Pop-up". Characters or the like are displayed at a position associated with a location of a shop or the like of the advertiser on the screen. For example, in FIG. 6D, the characters of "Buckwheat noodle at half price today" is displayed in a word balloon popped up from a position indicated by "▲ (a triangle sign) " which represents the shop or the like of the advertiser.

C: "Sound and voice". Sound and voice comes from a speaker. For example, in FIG. 6E, the triangle sign ▲ flashes and "Ding-dong. Buckwheat noodle at half price today. ..." comes from a speaker.

D: "Text". Characters are displayed on an entire screen. For example, In FIG. 6F, characters "Buckwheat noodle, Nov. 2 to 7, Opening Sale! ..." are displayed on the entire screen.

Returning to FIG. 12, a displayed period/times (a field 144) is a period or the number of times during which the advertiser wants to display the advertisement. The advertiser specifies either the period or the number of times. The number of times can be specified, for example, in the following three ways (a, b, and c) . Whereas the period can be specified in only one way (d).
a: A total number of times which users (who need not be one and the same user) visit an actual shop or the like of the advertiser. The map management apparatus 2 determines that a user visits the actual shop or the like, if the vehicle terminal 3 of the user enters, for example, a circle with a radius of 10 m centered at the actual shop or the like and stays there for 20 minutes or more. The map management apparatus 2 terminates the display of the advertisement after the users visit the actual shop or the like, for example, 100 times in total.
b: The number of times which the users pass by the actual shop or the like of the advertiser. The map management apparatus 2 determines that a user passes by the actual shop or the like, if the vehicle terminal 3 of the user enters, for example, a circle with a radius of 10 m centered at the actual shop or the like. The map management apparatus 2 terminates the display of the advertisement after the users pass by the actual shop or the like, for example, 100 times in total.
c: The number of times of delivery. The map management apparatus 2 continues to deliver the advertisement to the vehicle terminal 3 until the number of times of delivery reaches, for example, 100 times in total, regardless of whether the user visits or passes by the actual shop or the like. The map management apparatus 2 then terminates the display of the advertisement.
d: The number of days. The map management apparatus 2 continues to deliver the advertisement, for example, 365 days starting from a day when the advertisement is delivered for the first time. The map management apparatus 2 then terminates the display of the advertisement.

An advertisement timing (a field 145) is a timing (a point of time) when the advertisement appears in operating a screen. The timing includes the following four types.
I: A point of time just before the user passes by the actual shop or the like.
II: A point of time when the user searches for a route, and the actual shop or the like is then found to be present near the searched route.
III: A point of time when the user enters a prescribed area (for example, a prescribed administrative section).
IV: A point of time when the user updates a prescribed area on the map.
V: A point of time when the map management apparatus 2 is started after a communication between the vehicle terminal 3 and the map management apparatus 2 is established.

The advertisement selects one option from each of the four advertisement types, the four periods/number of times, and the five advertisement timings. In selecting the period/number of times, how to specify the period/number of times and a value thereof are also required to be selected. For example, if the advertisement selects a combination of "A, b: 1000, and I". This means that the advertiser wants an advertisement to be displayed in form of banner each time the user passes by the actual shop or the like of the advertiser during a time period during which the users pass by the actual shop or the like 1000 times (a record at the first row of FIG. 12). The advertiser may also select a plurality of combinations for one advertisement such as, for example, "A, c: 500 times, and I" and "B, d: 90 days, and VI" (records at the third and the fifth row of FIG. 12).

FIG. 6A illustrates a case in which combinations of "A, c: 500 times, and I", "A, c: 500 times, and III", and the like may be used. Similarly, FIG. 6B, "A, c: 500 times, and IV" and the like; FIG. 6C, "A, c: 500 times, and II" and the like; FIG. 6D, "B, c: 500 times, I" and the like; FIG. 6E, "C, c: 500 times, I", "C, c: 500 times, III", and the like; and FIG. 6F, "D, c: 500 times, V" and the like.

Returning to FIG. 12, an advertising rate (a field 146) is an amount paid by the advertiser. The advertising rate may be a per-unit-time fee or a fixed fee for sellout which is independent of a time period. For example, the advertiser may previously make a single payment of a fixed fee independent of a time period and then discontinue the advertisement when the number of times the users visit the actual shop or the like reaches a specified number of times (the number of times guarantee). A distribution coefficient (a field 147) is as explained above (see FIG. 2B). An opening hour (a field 148) is a combination of an opening time and a closing time of a shop or the like. A fixed holiday (a field 149) is one or more days of the week when the shop or the like is closed. An advertising text (a field 150) is contents of the advertisement represented by characters or by sound and voice.

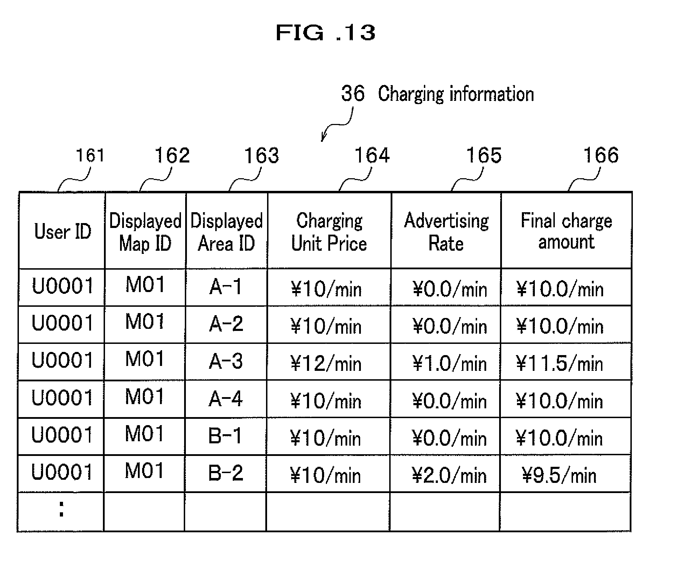

Referring to FIG. 13, the charging information 36 is described. A user ID (a field 161), a displayed map ID (a field 162), a displayed area ID (a field 163), a charging unit price (a field 164), and an advertising rate (a field 165) are as explained above.

A final charge amount (a field 166) is a value calculated by Expression (1) as follows: $Final charge amount = Charging unit price - Σ \left(Advertising rate\times Distribution coefficient\right)$

The charging unit price is defined for each area, whereas the advertising rate and the distribution coefficient are defined for each advertisement (or advertiser). Hence, the final charge amount of a given area is calculated by deducting a total value of "advertising rate × distribution coefficient" for all advertisements displayed in the given area, from a charging unit price of the given area. Note that if no advertisement is displayed in an area, a value of the advertising rate is "0.0". The price with advertisement (reference numeral 56 of FIG. 2B) is a value calculated by Expression (2) as follows: $Price with advertisement = Σfinal charge amounts$

The price with advertisement is defined for each map. Hence, the price with advertisement of a given map is a total value of final charge amounts of all areas contained in the map.

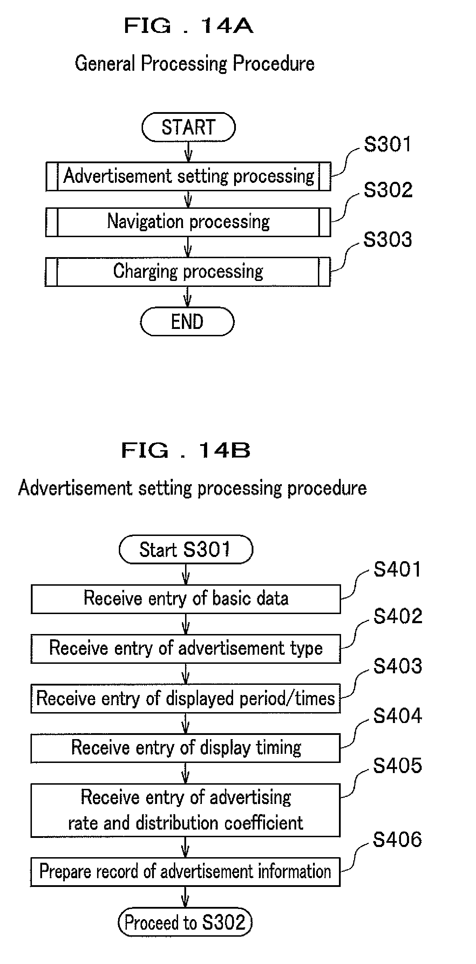

Referring to FIG. 14A, a general processing procedure performed by the map management apparatus 2 is described. Before the general processing procedure is started, the following conditions (1) to (5) are to be satisfied.
(1) The map management part 21 prepares and stores the point-of-interest information 31 (FIG. 8) in the auxiliary storage device 15. Each time any relevant event occurs such as opening of a new road, shop, or the like, the map management part 21 adds a record on the event including a graphic of the new road, shop, or the like, to the point-of-interest information 31. It will be understood, however, that addition of a new record does not always mean that all of the vehicle terminals 3 can use a map with a graphic of the newly-added record. After the user who sees the useful tip screen 81 gives an instruction of updating the map (to be described in detail hereinafter), the user can use the updated one.
(2) When the first version of a map for an area is prepared, the map management part 21 prepares a record on the first version in the update history information 32 (FIG. 9) and stores the record in the auxiliary storage device 15. Each time the version is updated, the map management part 21 prepares a new record in an updated version. Note that at a time when the new record is created, the user ID field 116 is blank. Each time a user purchases or updates a map, the map management part 21 stores an appropriate user ID in the user ID field 116.
(3) When a new toll road is opened, the map management part 21 creates and stores a new piece of the toll road information 33 (FIG. 10) on the new toll road in the auxiliary storage device 15. This results in that some pieces of the toll road information 33 are already present when the general processing procedure is started.
(4) The navigation part 23 already holds the display history information 34 (FIG. 11A) in real time while a communication with the vehicle terminal 3 has been established, and stores the display history information 34 in the auxiliary storage device 15. The map management apparatus 2 thus has a history on which a user has seen which area of which map at which time.
(5) The charging information 36 (FIG. 13) is already stored in the auxiliary storage device 15 by default. The default used herein means that, for all the records, the advertising rate is blank; and the final charge amount is equal to a charging unit price.

In step S301, the advertisement management part 22 performs an advertisement setting processing and completes the advertisement information 35 (FIG. 12).

In step S302, the navigation part 23 performs a navigation processing, to thereby display an appropriate map and the useful tip screen 81 in the output device of the vehicle terminal 3.

In step S303, the charging management part 24 performs a charging processing, to thereby calculate an amount charged to a user. Next are described in detail the processings of steps S301 to S303.

Referring to FIG. 14B, the advertisement setting processing procedure is described which is details of step S301 of the general processing procedure.

In step S401, the advertisement management part 22 receives basic data on advertisements. More specifically, the advertisement management part 22 receives basic data on advertisements for each advertiser via the input device 12. The basic data includes an address of the shop or the like of an advertiser, a location of the advertiser (a latitude and a longitude of the shop or the like), a name of the advertiser, an opening hour, a fixed holiday, and an advertising text (a sales talk, a menu list, or the like).

In step S402, the advertisement management part 22 receives an entry of an advertisement type via the input device 12.

In step S403, the advertisement management part 22 receives an entry of a displayed period/times via the input device 12.

In step S404, the advertisement management part 22 receives an entry of a display timing via the input device 12.

If the advertiser selects a plurality of such combinations as, for example, "A, c: 500 times, and I" and "B, d: 90 days, and IV", steps S402 to S404 are performed as long as and as much times as the period and the number of times specified by the combinations.

In step S405, the advertisement management part 22 receives an entry of an advertising rate and a distribution coefficient via the input device 12.

In step S406, the advertisement management part 22 prepares a record of the advertisement information 35. More specifically, firstly, the advertisement management part 22 prepares a new record of the advertisement information 35 and stores a newly-prepared advertiser ID in the advertiser ID field 141. Secondly the advertisement management part 22 stores the information received in steps S401 to S405, in the other fields 142 to 150 of the new record. The advertisement management part 22 then advances the processing to step S302.

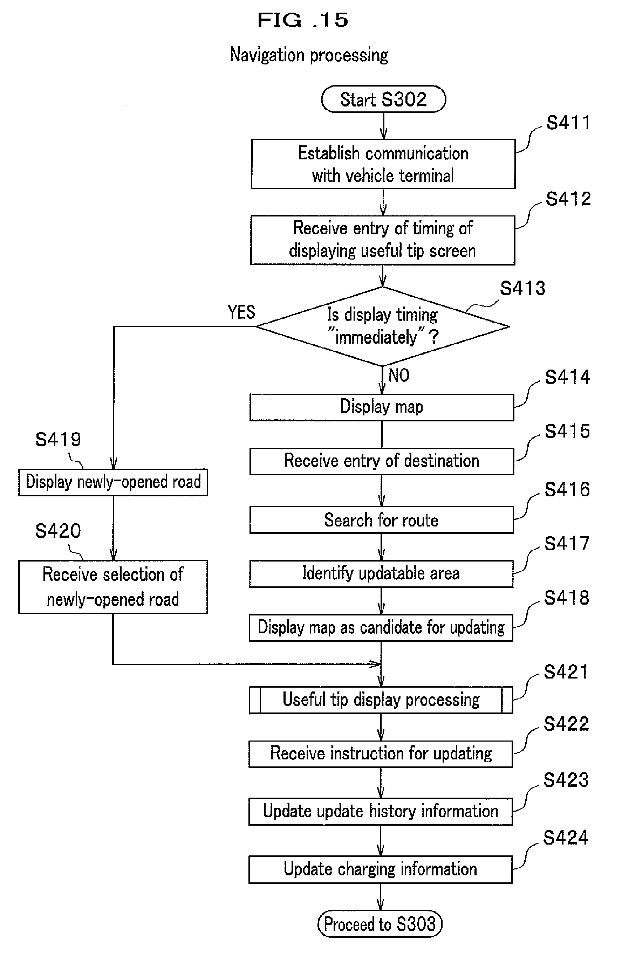

Referring to FIG. 15, a navigation processing procedure is described which is details of step S302 of the general processing procedure.

In step S411, the navigation part 23 establishes a communication with the vehicle terminal 3. The vehicle terminal 3 then transmits a user ID to the map management apparatus 2.

In step S412, the navigation part 23 receives a timing of displaying the useful tip screen 81. A timing at which the user knows whether or not there is a newly-opened road varies depending on the user's willingness to know that. Sometimes the user may want to know before a start of driving a car. Other times the user may just start driving, search for a route for a destination, and find that a new road or the like is opened near the searched route. In the former case, the vehicle terminal 3 transmits a signal indicating that the display timing is "immediately", and, in the latter case, a signal indicating "later", to the map management apparatus 2. The navigation part 23 of the map management apparatus 2 receives the transmitted signal.

In step S413, the navigation part 23 determines whether or not the display timing is "immediately". More specifically, if the signal received in step S412 is determined to be "immediately" (if "YES" in step S413), the navigation part 23 advances the processing to step S419. And if not (if "NO" in step S413), the navigation part 23 advances the processing to step S414.

In step S414, the navigation part 23 displays an appropriate map. More specifically, firstly, the navigation part 23 searches the update history information 32 (FIG. 9) using the user ID transmitted in step S411 as a search key and identifies a version which is currently available to the user (which may also be referred to as a "current version") for each of the areas. In a case where the user ID in the user ID field 116 is as described in the example of FIG. 9 and the user ID transmitted in step S411 is "U0001", a version "V0001" (the first version) is identified as a current version for all the areas.

Secondly, the navigation part 23 displays a map near a current position of the vehicle terminal 3 in the output device of the vehicle terminal 3. Each of the areas of the displayed map is the identified current version. In each of the areas, all graphics associated with an area ID of the area in the point-of-interest information 31 (FIG. 8) are displayed.

In step S415, navigation part 23 receives an entry of a destination. More specifically, the navigation part 23 receives an entry of a destination by the user via the input device of the vehicle terminal 3. The user, for example, touches "Temple G" on the screen of FIG. 3A with his/her finger.

In step S416, the navigation part 23 searches for an appropriate route. More specifically, firstly, the navigation part 23 searches for the shortest route from a current position (Hospital F) to the destination (Temple G) based on the map displayed in step S414 and acquires the searched result.

In step S417, the navigation part 23 identifies an updatable area. The "updatable area" used herein means that, if a currently-available area for one user is not the newest version for another user and thus has another version newer than the current version, the currently-available area is referred to as the "updatable area". The version newer than the current version is referred to as the "updatable version". Referring to FIG. 9, the areas "A-2", "B-2", "D-3", "E-2", and "E-3" are found to be updatable areas for a user "U0001". For the areas "A-2" and "B-2", "V0002" is the updatable version. For the areas "D-3", "E-2", and "E-3", "V0003" is the updatable version. That is, the versions which are updated following openings of Bridge I and Bypass Y are worth providing to the user "U0001".

In step S418, the navigation part 23 displays a map as a candidate for updating. More specifically, firstly, the navigation part 23 again searches for an appropriate route in the identified updatable area, using an updatable version of the map. In the re-search, a current position and a destination are same as those in step S416.

Secondly, the navigation part 23 displays the updated map and route as results of the re-search in the output device of the vehicle terminal 3. At this time, the user sees, for example, the screens of FIG. 3B and FIG. 4A. It is desirable to display the both screens in a superimposed form, because a difference between the first-searched and the re-searched routes can be clearly presented to the user.

In step S419, after going through step S413 "YES", the navigation part 23 displays a newly-opened road. More specifically, firstly, the navigation part 23 searches the point-of-interest information 31 (FIG. 8) using, as a search key, a text of the remark ("Bridge I" or the like) stored in a record of the updatable version of the updatable area from among the update history information 32 (FIG. 9) and acquires a record as the searched result. The navigation part 23 then identifies the "current version" by performing a step similar to step S414, and determines the "updatable area" and "updatable version" as explained in step S417. The navigation part 23 then creates a character string indicating that a new road was opened such as "October 30, K City K Ward, 1.0 km", based on a graphic type, a graphic location, and a created date of the acquired record.

Secondly, the navigation part 23 creates the screen of FIG. 7B using the prepared character string and displays the created screen in the output device of the vehicle terminal 3.

Thirdly, the navigation part 23 receives narrowing of candidates of newly-opened roads by the user. There are various ways of how to narrow the candidates, and one example is shown in screens 93 to 96 of FIG. 7B. That is, the screen 93 is switched to the screen 94 upon a selection of an individual update button 93a by the user. The screen 94 is switched to the screen 95 upon a selection of a road button 94a by the user. And the screen 95 is switched to the screen 96 upon a selection of a general road button 95a by the user.

In step S420, the navigation part 23 receives a selection of a newly-opened road. More specifically, the navigation part 23 receives an entry of a check mark in a check box provided on a left side of the screen of FIG. 7B and representing a newly-opened road, by the user.

In step S421, which is performed directly after step S418 or S420, the navigation part 23 performs a useful tip display processing. Though details will be described later, the map management apparatus 2 transmits a price for updating an area not yet updated by the vehicle terminal 3 as well as an amount calculated by deducting at least a part of the advertising rate from the price for updating, to the vehicle terminal 3. The vehicle terminal 3 then displays the received price in the output device thereof.

In step S422, the navigation part 23 receives an instruction for updating a map from the vehicle terminal 3.

In step S423, the navigation part 23 updates the update history information 32 (FIG. 9). More specifically, the navigation part 23 stores the user ID transmitted from the vehicle terminal 3 in step S411, in the user ID field 116 of a record of an updatable version of an updatable area or of a record whose remark field 117 has a name of the newly-opened road selected in step S420 (Bridge I or the like), from among the records of the update history information 32 (FIG. 9).

In step S424, the navigation part 23 updates the charging information 36 (FIG. 13). More specifically, the navigation part 23 updates the charging unit price, the advertising rate, and the final charge amount of the charging information 36 to those calculated in step S421, respectively. The navigation part 23 then advances the processing to step S303.

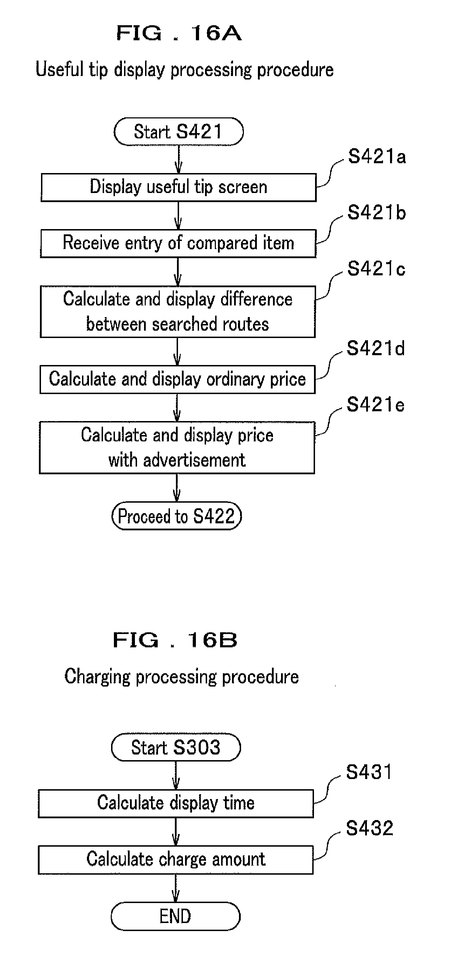

Referring to FIG. 16A, a useful tip display processing procedure is described which is details of step S421 of the navigation processing procedure.

In step S421a, the navigation part 23 displays the useful tip screen 81 (FIG. 5B). More specifically, the navigation part 23 displays the useful tip screen 81 in the output device of the vehicle terminal 3. At this stage, the benefit field 83 and the update price field 84 are blank.

In step S421b, the navigation part 23 receives an entry of a compared item. More specifically, the navigation part 23 receives a selection of one of the four buttons 82a to 82d in the compared item field 82 by the user.

In step S421c, the navigation part 23 calculates and displays a difference between a pair of searched routes. More specifically, the navigation part 23 calculates a difference between a pair of searched routes with respect to the compared item selected in step S421b and displays the calculated result in the bar chart 83a, the field 83b, and the field 83c. A pair of the routes herein means "a route searched in step S416 and a route re-searched in step S418" or "a route searched based on a map which is not yet updated following an opening of the new road selected in step S420 and a route searched based on a map which is already updated following the opening of the new road.

In step S421d, the navigation part 23 calculates and displays an ordinary price. More specifically, the navigation part 23 acquires, for all the areas, a charging unit price of a current version which the user currently uses, based on the update history information 32 (FIG. 9). The navigation part 23 displays a total value of all of the acquired charging unit prices, as the ordinary price, in the field 84a.

In step S421e, the navigation part 23 calculates and displays a price with advertisement. More specifically, firstly, the navigation part 23 searches the advertisement information 35 (FIG. 12) and acquires an advertising rate and a distribution coefficient of a record whose advertiser location is in an updatable area. The navigation part 23 applies the acquired charging unit price, advertising rate, and distribution coefficient to the above-described Expression (1) and Expression (2), to thereby calculate a price with advertisement. The navigation part 23 then displays the calculated price with advertisement in the field 84b. At this time, a sample of an advertisement may be displayed on the map (reference numeral 63 of FIG. 4A and reference numerals 65 and 66 of FIG. 4B).

The navigation part 23 then advances the processing to step S422.

Referring to FIG. 16B, a charging processing procedure is described which is details of step S303 of the general processing procedure.

In step S431, the charging management part 24 displays a display time. More specifically, the charging management part 24 calculates, for all the areas, a total value of how long an area is displayed within a prescribed time period (for example, for one month) (a displayed time) based on the display history information 34 (FIG. 11A).

In step S432, the charging management part 24 calculates a charge amount. More specifically, the charging management part 24 calculates the charge amount by multiplying, for each area, a final charge amount in the charging information 36 by the display time acquired in step S431 and summing up the products for all the areas. The charging information 36 then associates the user ID with the charge amount and stores the associated information as "charging information" (not shown) in the auxiliary storage device 15. The charging information is used when the map creation company 51 or the map updating contractor 54 issues a bill to the terminal device user 52. The charging management part 24 then terminates the general processing procedure.

### [Variation 1]

The navigation part 23 stores the number of displayed times which an advertisement is displayed in the output device of the vehicle terminal 3 during a prescribed time period (for example, for one month), in the auxiliary storage device 15 in association with an appropriate advertiser ID. Each time the prescribed time period expires, the charging management part 24 reviews the advertising rate and the distribution coefficient using, for example, the following Expressions (3) to (5) and updates the advertisement information 35 based on the reviewed results. $Rate of increase in number of displayed times = \left(Number of displayed times in present period-Number of displayed times in previous period\right) / Number of displayed times in previous period$ $Advertising rate in subsequent period = Advertising rate in present period \times Rate of increase in number of displayed times$ $Distribution coefficient in subsequent period = Distribution coefficient in present period \times Rate of increase in number of displayed times \left(wherein a upper limit of left member=1.0\right)$

### [Variation 2]

In step S417, the navigation part 23 receives an entry of a line surrounding a specified area 97a which the user draws on a screen-displayed map 97 (FIG. 7C) with his/her finger and narrows the updatable area only to that within the specified area 97a. Alternatively, if an advertiser location 97c is present within a prescribed distance from a newly-opened road 97b in the narrowed updatable area, even though the advertiser location 97c is actually outside the specified area 97a, the navigation part 23 is configured to recognize that the advertiser location 97c is within the specified area 97a and is thus within the updatable area (a screen 98 of FIG. 7C). [Variation 3]

The navigation part 23 identifies an area through which the user passes a prescribed number of times or more during a prescribed time period, based on the display history information 34 (FIG. 11A). In step S419, the navigation part 23 narrows the newly-opened roads only to those in the identified area and displays the number of the narrowed newly-opened roads in a field 94c of a my area button 94b (FIG. 7B). When the user presses down the my area button 94b, the navigation part 23 displays only the narrowed newly-opened roads on the screen 96.

### [Variation 4]

Local governments, corporations based on local communities, and the like may want to attract visitors from outside so as to revitalize their communities. An advertiser can thus include nonprofit entities (FIG. 6G). In this case, the advertisement rate of the advertisement information 35 is "¥0.0".

### [Variation 5]

The navigation part 23 determines whether or not a current date and time is included in a time period for a prescribed marketing campaign. If so, the navigation part 23 determines that, in step S421e, the price with advertisement is "¥0" and displays "Free" in the field 84b of FIG. 5B.

### <Advantageous Effects of Embodiment>

In this embodiment, a user can make a quantitative understanding about benefit if a map used is partially updated. Further, the user can easily compare prices with and without an advertisement.

The embodiment of the present invention is not limited to the above explanations, and those skilled in the art can make various modifications and variations to the present invention without departing from the spirit and scope of the present invention.

## Claims

1. A map management apparatus, comprising:
a storage unit that stores therein update history information which stores therein a user of a terminal unit to which a version of an area of a map is available, the user being associated with the version of the area of the map, and at least one area constituting the map; and
a control unit that creates, based on the update history information, information for encouraging the user to update the version, by comparing a first route which is searched using a currently-available version to a second route which is searched using a version updated from the currently-available version, transmits the created information to the terminal unit, and makes the transmitted information display in the terminal unit.

2. The map management apparatus according to claim 1,
wherein the storage unit stores therein advertisement information which stores therein an advertising rate of an advertisement to be displayed on the map and is paid by an advertiser of the advertisement,
wherein the update history information stores therein a price paid by the user who uses an area of the map, in association with the price and the area, and
wherein the control unit calculates: a price of a more updated version of the area than a version currently-available to the user; deducting at least a part of the advertising rate from the calculated price; transmits the deducted price to the terminal unit; and makes the terminal unit display the transmitted price.

3. The map management apparatus according to claim 1,
wherein the information for encouraging the user to update the currently-available version includes at least one of a distance, a time, a toll fare, and an amount of emissions used in comparing the first and second routes.

4. A map management method performed by a map management apparatus including a storage unit and a control unit, the map management method comprising:
a step, performed by the storage unit, of storing update history information which stores therein a user of a terminal unit to which a version of an area of a map is available, the user being associated with the version of the area of the map, and at least one area constituting the map; and
steps, performed by the control unit, of creating, based on the update history information, information for encouraging the user to update the version, by comparing a first route which is searched using a currently-available version to a second route which is searched using a version updated from the currently-available version; transmitting the created information to the terminal unit; and making the transmitted information display in the terminal unit.

5. The map management method according to claim 4, further comprising:
a step, performed by the storage unit, of storing advertisement information which stores therein an advertising rate of an advertisement to be displayed on the map and is paid by an advertiser of the advertisement, wherein the update history information stores therein a price paid by the user who uses an area of the map, in association with the price and the area; and
steps, performed by the control unit, of calculating a price of a more updated version of the area than a version currently-available to the user; deducting at least a part of the advertising rate from the calculated price; transmitting the deducted price to the terminal unit; and making the terminal unit display the transmitted price.

6. The map management method according to claim 4,
wherein the information for encouraging the user to update the currently-available version includes at least one of a distance, a time, a toll fare, and an amount of emissions used in comparing the first and second routes.
